(19)

Europäisches
Patentamt
European
Patent Office
Office européen
des brevets

(11) **EP 3 208 150 A1**

(12) **EUROPEAN PATENT APPLICATION**

(43) Date of publication:
**23.08.2017 Bulletin 2017/34**

(51) Int Cl.:
**B60Q 1/44** *(2006.01)*

(21) Application number: **16020048.1**

(22) Date of filing: **22.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Iudica, Riccardo**
**08029 Barcelona (ES)**

(72) Inventor: **Iudica, Riccardo**
**08029 Barcelona (ES)**

(54) **METHOD FOR ACTIVATING THE STOP LAMPS OF A VEHICLE WHEN THE SERVICE BRAKES ARE NOT USED**

(57)    The present invention describes a method for activating the stop lamps (3) of a vehicle when the service brakes are not used. The invention addresses the problem of inefficient signalization that occurs when a vehicle reduces its speed without using the service brakes, for example due to a road uphill or to the use of the engine brakes.

The problem is solved by monitoring the vehicle speed and detecting when the vehicle decelerates at a rate greater than the deceleration due to friction with the asphalt. When this occurs, a signal is sent to the stop lamps (3) to activate them. Two configurations are described: a fixed configuration, where the static friction coefficient of the asphalt is known and set by the manufacturer; the other is an adaptive configuration, where the asphalt friction coefficient is estimated by an external coefficient detection device (4).

Fig 1

EP 3 208 150 A1

## Description

## Technical Field

The present invention describes a system to detect when a vehicle is reducing its speed without using the service brakes in order to activate the brake lights of the vehicle.

## Background Art

According to the UN Regulation 7: Front and rear position lamps, stop lamps and end-outline marker lamps (Ref. [0003]    E/ECE/TRANS/505/Add.6/Rev.6. 3), the stop lamps indicate when the driver is applying the service brakes. They may be activated by the application of a retarder or a similar device.

## Summary of invention

The proposed idea is applicable for any vehicle with any number of wheels (2, 3, 4 or more) and any type of engine (internal combustion, electric, hybrid, etc.), equipped with an electronic control unit (or ECU) which controls the speed of the vehicle itself. Many manufacturers call the ECU which controls the speed of the vehicle Powertrain Control Module, or PCM. However, this does not limit the scope of the proposed idea, as the logic described can be applied to any ECU which processes the Vehicle Speed Signal, or VSS. For this reason, throughout the document, the control unit will be referenced as ECU.

Technical Problem

In many situations, the behaviour of the stop lamps of a vehicle is not enough to achieve an effective signalization. Some of the possible reasons include:

- a road uphill, like the situation of a vehicle slowing down in a highway which goes uphill;
- the use of engine brakes: this is very common when the road is slippery due to rain or snow or with motorcycles or cars with big torque/weight ratio, where shifting down a gear produces enough deceleration to slow down the vehicle considerably

The previous situations can be worsened when any of the following occurs:

- the weather is foggy, rainy or there is low visibility; it will be difficult to see the preceding vehicle slowing down until it is too close;
- night time or bad illuminated roads make the preceding vehicle difficult to spot and they make even more difficult to detect change in speed.

The scenarios described before are dangerous because the vehicle slows down without activating the stop lamps. A second vehicle which happens to follow the first one too close may have difficulties in realizing that the first is slowing down and this fact increases the likelihood of an accident happening.

Solution to Problem

The proposed idea intends to address the problem by means of the ECU of the vehicle. One of the functions of the ECU is to collect data of the speed of the vehicle, which come from the Vehicle Speed Sensor, and feed it in the speedometer on the vehicle dashboard. With the proposed solution, the ECU also calculates the differential value of the speed of the vehicle, i.e. its acceleration. When the computer detects a negative acceleration greater than a given value, caused for example by a change in the road inclination or by a gear down shifting, it activates the stop lamps.
Two configurations are described:

- an adaptive configuration: this configuration relies on a friction coefficient detection device, like the one described in WO2015190769 (A1), to detect the friction coefficient of the road on which the vehicle is moving. The detected coefficient is then used by the ECU to calculate the minimum negative acceleration that require the stop lamps to be activated;
- a fixed configuration: in this configuration, the friction coefficient is fixed and known from the beginning. The fixed value is used by the ECU to calculate the minimum negative acceleration that require the stop lamps to be activated.

The proposed idea, in its both configurations does not intend to replace the current functionality of the stop lamps: they will also be activated when the driver activates the service brakes. This will allow preserving the present functionality. It is to be understood that both the foregoing general description and the following detailed description are exemplary, and are intended to provide further explanation of the invention as claimed.

Advantageous effect of invention

The presented invention allows the driver of a vehicle to achieve a better signalization of the decreasing speed. The main effect of the invention is the capability of the ECU of the vehicle to switch on the stop lamp based on the actual speed of the vehicle, regardless if the service brakes are activated.
The improved signalization reduces the likelihood of road accidents and this translates in a long term improvement of road safety.

**Brief description of drawings**

The present document includes some drawings which help to describe the invention. Their purpose is mere explanatory and they do not limit the scope of the invention itself. In particular:

- Fig 1 represents the signal connections between the ECU, the friction coefficient detection device, the vehicle sensors and the stop lamps under the configuration A;
- Fig 2 represents the signal connections between the ECU, the vehicle sensors and the stop lamps under the configuration B;
- Fig 3 is a flowchart of the system's behaviour under configuration A;
- Fig 4 is a flowchart of the system's behaviour under configuration B.

**Description of embodiments**

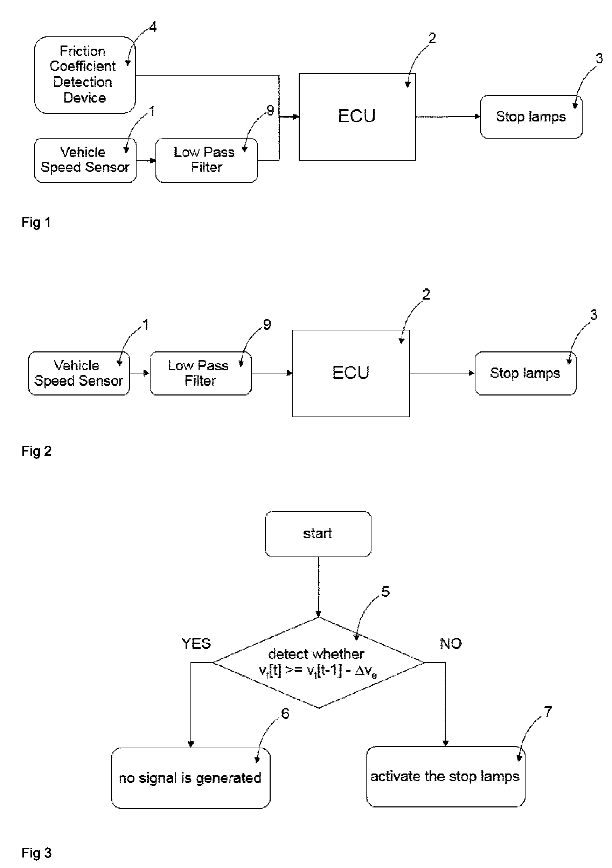

Two configurations have been designed, namely adaptive or A and fixed or B. The present invention will now be described in both configurations, making also reference to the drawing figures.
References are made from Fig 1 which is a schematic view of the connections that are in place with the adaptive configuration, or configuration A. The Friction Coefficient Detection Device (4) estimates the friction coefficient of the asphalt and sets the value into the ECU (2); this, in turns, utilizes said value in order to calculate the approximate force that is applied to the vehicle due to friction.
The force applied to the vehicle due to friction can be defined as follows:

$$F_f = a_f * m = \mu * g * m$$
**Math. 1**

Given the value of the friction coefficient, the equivalent differential velocity $\Delta v_e$ experienced by the vehicle is calculated as follows:

$$\Delta v_e = \mu * g * T_s$$
**Math. 2**

where $T_s$ is the inverse of $f_s$, which is the sampling frequency of the ECU, a design variable defined by the manufacturer. The actual value chosen by the manufacturers does not limit the scope of the invention.
The vehicle speed signal, or VSS, comes from the vehicle speed sensor (1) and, after being filtered by a low pass filter (9), is passed as input to the ECU. The vehicle speed is analysed and, when the ECU detects that the vehicle is slowing down at a rate greater than the deceleration due to friction, it sends a signal to the stop lamps (3) in order to switch them on. In the following examples, we will consider a moving average filter as implementation of the low pass filter; however, the type of the filter does not limit the scope of the invention.
The configuration A is applicable only to those vehicles which are equipped with a Friction Coefficient Detection Device, or similar device. An example of the Friction Coefficient Detection Device can be found in WO2015190769 (A1), although this does not limit the scope of the invention.
References are made from Fig 2, which is a schematic view of the connections that are in place with the fixed configuration, or configuration B. In this configuration the static friction coefficient is known from the beginning and chosen by the manufacturer, $\mu$.m.

Given the value of the friction coefficient, the equivalent differential velocity $\Delta v_{em}$ is calculated as follows:

$$\Delta v_{em} = \mu_m * g * T_s$$

**Math. 3**

where, as in configuration A, $T_s$ is the inverse of $f_s$, the sampling frequency of the ECU, which is a design variable defined by the manufacturer. The actual value chosen by the manufacturers does not limit the scope of the invention.

The vehicle speed signal, or VSS, comes from the vehicle speed sensor (1) and, after being filtered by a low pass filter (9), is passed as input to the ECU. The vehicle speed is analysed and, when the ECU detects that the vehicle is slowing down at a rate greater than the deceleration due to friction, it sends a signal to the stop lamps (3) in order to switch them on. In the following examples, we will consider a moving average filter as implementation of the low pass filter; however, the type of the filter does not limit the scope of the invention.

The configuration B is applicable to any vehicle equipped with a vehicle speed sensor, included those for which the configuration A is applicable.

References are made from Fig 3, which is a flowchart of the logic that the ECU uses in the Configuration A to detect whether the deceleration is greater than the one due to friction (5).

Let $v_f[t]$ be the filtered speed of the vehicle at instant $t$ and $v_f[t-1]$ is the filtered speed of the vehicle at the previous instant; let us define $a[t]$ as the acceleration of the vehicle at the instant $t$. The value of $a[t]$ can be calculated as follows:

$$a[t] = (v_f[t] - v_f[t-1])/T_s = (v_f[t] - v_f[t-1]) * f_s$$

**Math. 4**

The comparison of the acceleration of the vehicle against the acceleration due to friction can be written as follows:

$$a[t] \geq a_f$$

**Math. 5**

which becomes:

$$(v_f[t] - v_f[t-1])/T_s \geq a_f$$

**Math. 6**

and

$$v_f[t] \geq v_f[t-1] - \mu * g * T_s = v_f[t-1] - \Delta v_e$$

**Math. 7**

When the speed of the vehicle at instant t is greater than the right hand value, no signal is generated and the normal behaviour of the stop lamps is respected (6). On the other hand, if the speed is smaller, an electric signal is sent to the stop lamps in order to switch them on (7).

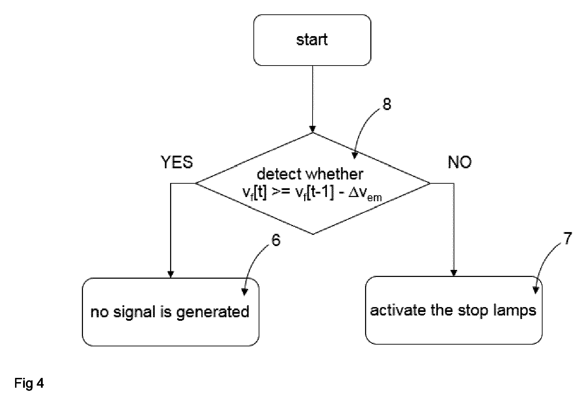

References are made from Fig 4, which is a flowchart of the logic that the PCM uses in the Configuration B to detect whether the deceleration is greater than the one due to friction (8). The logic is similar to Fig. 3, the only change being the value of $\Delta v_{em}$ which is fixed and is not modified by the ECU.

Example

Here follow two examples of the behaviour of the proposed invention. Their purpose is mere explanatory and does not limit the scope of the invention. In both examples, the low pass filter has been implemented with a moving average filter, that is a finite impulse response filter with n points where the output is described by the formula:

$$y[t] = \frac{1}{n} \sum_{i=0}^{i=n-1} (x[t-i])$$

**Math. 8**

Example 1: Adaptive configuration

Input data:

$$v_f[t] = 54.5 \text{ km/h} = 15.14 \text{ m/s}$$

$$v_f[t-1] = 55 \text{ km/h} = 15.28 \text{ m/s}$$

$$\mu = 0.7$$

$$f_s = 100 \text{ Hz}$$

$$T_s = 1/f_s = 10^{-2} \text{ s}$$

Number of points of the filter: 1

Calculations

The equivalent differential velocity is calculated by the ECU as:

$$\Delta v_e = \mu * g * T_s = 0.7 * 9.81 * 10^{-2} = 6.87 * 10^{-2} \text{ m/s}$$

The moving average filter has only 1 point, hence the filtered signal is equal to the vehicle speed signal.

$$v_f[t-1] - \Delta v_e = 15.21 \text{ m/s}$$

$v_f[t]$ is smaller than $v_f[t-1] - \Delta v_e$ hence a signal is sent to the brake lamps to switch them on

Example 2: Fixed configuration

Input data:

$$v_f[t] = 54.83 \text{ km/h} = 15.23 \text{ m/s}$$

$$v_f[t-1] = 55 \text{ km/h} = 15.28 \text{ m/s}$$

$$v_f[t-2] = 55.08 \text{ km/h} = 15.3 \text{ m/s}$$

$$v_f[t-3] = 55.08 \text{ km/h} = 15.3 \text{ m/s}$$

$$\mu_m = 0.3$$

$$f_s = 100 \text{ Hz}$$

$$T_s = 1/f_s = 10^{-2} \text{ s}$$

Number of points of the filter: 3

Calculations

The equivalent differential velocity is calculated by the ECU as:

$$\Delta v_{em} = \mu_m * g * T_s = 0.3 * 9.81 * 10^{-2} = 2.94 * 10^{-2} \text{ m/s}$$

The moving average filter has 3 points, hence the filtered speed values for $t$, $v_f[t]$ and $t-1$, $v_f[t-1]$ are calculated as follows:

$$v_f[t] = 1/3 * (v[t] + v[t-1] + v[t-2]) = 1/3 * (15.23 + 15.28 + 15.3) = 15.270 \text{ m/s}$$

$$v_f[t-1] = 1/3 * (v[t-1] + v[t-2] + v[t-3]) = 1/3 * (15.28 + 15.3 + 15.3) = 15.293 \text{ m/s}$$

$$v_f[t-1] - \Delta v_{em} = 15.264 \text{ m/s}$$

$v_f[t]$ is greater than $v_f[t-1] - \Delta v_e$ hence no signal is sent to the brake lamps

**Industrial applicability**

Safety, especially in the road infrastructure, has always been the topic of many discussions and has always been the ultimate goal of many researches, discoveries and standards.
The present invention describes a feature which can be applied to any vehicle with any number of wheels (two, three, four or more) and any type of engine, with the goal of increasing its safety when driving it.
From this consideration comes the belief that the invention can be applied in the manufacturing of road vehicle of any kind and in any geographical area.

**Reference signs list**

Here follows a list of the reference signs that appear in the drawings:

- (1) Vehicle Speed Sensor, installed in the vehicle;
- (2) Electronic Control Unit equipped in the vehicle;
- (3) Stop lamps of the vehicle;
- (4) Vehicle Speed Sensor, installed in the vehicle;
- (5) Condition to detect a deceleration greater than the one due to friction in the adaptive configuration;
- (6) No signal for the stop lamps is generated. The normal behaviour of the stop lamps is maintained;

**EP 3 208 150 A1**

- (7) The signal to activate the stop lamps is generated;
- (8) Condition to detect a deceleration greater than the one due to friction in the fixed configuration;
- (9) Low pass filter applied to the vehicle speed signal.

**Citation list**

In the following section are listed the patent and non-patent reference used in this description.

Patent literature

WO2015190769 (A1) - VEHICLE ACTIVE SAFETY SYSTEM. YI KYONG SU [KR]; HAN SEUNG JAE [KR]; KIM TAE WOO [KR] et Al.

Non-patent literature

UN Regulation 7: Front and rear position lamps, stop lamps and end-outline marker lamps (Ref. E/ECE/TRANS/505/Add.6/Rev.6. 3)

**Claims**

1. A method for activating the stop lamps of a vehicle when the service brakes are not used in an adaptive configuration; a friction coefficient detection device estimates the friction coefficient of the asphalt; said coefficient is sent as input to the electronic control unit of the vehicle; a vehicle speed sensor detects the speed of the vehicle; said speed is filtered by a low pass filter; the filtered speed signal is sent to the electronic control unit; the electronic control unit is connected to the stop lamps of the vehicle

2. The method in Claim 1, wherein:

   the electronic control unit uses the friction coefficient to estimate the equivalent differential velocity; the filtered vehicle speed is compared against the difference between the previous value and the equivalent differential velocity;
   when the speed is greater, no signal is sent to the stop lamps; when the speed is smaller, a signal is sent to the stop lamps in order to switch them on.

3. A method for activating the stop lamps of a vehicle when the service brakes are not used in a fixed configuration; a vehicle speed sensor detects the speed of the vehicle; said speed is sent to a low pass filter; the filtered speed signal is sent to the electronic control unit; the electronic control unit is connected to the stop lamps of the vehicle

4. The method in Claim 3, further comprising:

   a fixed value for the static friction coefficient of the asphalt; the electronic control unit uses the friction coefficient to estimate the equivalent differential velocity;

5. The method in Claim 4, wherein:

   the filtered vehicle speed is compared against the difference between the previous value and the equivalent differential velocity; when the speed is greater, no signal is sent to the stop lamps; when the speed is smaller, a signal is sent to the stop lamps in order to switch them on.

Friction
Coefficient
Detection
Device — 4

Vehicle
Speed Sensor — 1

Low Pass
Filter — 9

ECU — 2

Stop lamps — 3

Fig 1

Vehicle
Speed Sensor — 1

Low Pass
Filter — 9

ECU — 2

Stop lamps — 3

Fig 2

start

detect whether
$v_f[t] >= v_f[t-1] - \Delta v_e$ — 5

YES

NO

no signal is generated — 6

activate the stop lamps — 7

Fig 3

start

8

YES        detect whether
$v_f[t] >= v_f[t-1] - \Delta v_{em}$        NO

6

no signal is generated

7

activate the stop lamps

Fig 4

Europäisches
Patentamt

European
Patent Office

Office européen
des brevets

**EUROPEAN SEARCH REPORT**

Application Number

EP 16 02 0048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 818 233 A1 (FORD GLOBAL TECH LLC [US]) 15 August 2007 (2007-08-15) * paragraphs [0011] - [0037]; figure 1 * ----- | 1-5 | INV. B60Q1/44 |
| X | US 2007/159318 A1 (ROSER CHARLES R [US]) 12 July 2007 (2007-07-12) * paragraphs [0011] - [0020]; figure * ----- | 3-5 | |
| X | EP 2 889 182 A2 (MITSUBISHI MOTORS CORP [JP]) 1 July 2015 (2015-07-01) * paragraphs [0020] - [0068]; figures * ----- | 3-5 | |
| A | WO 2012/006987 A1 (WABCO GMBH [DE]; BINDER HARTMUT [DE]; BREUER KARSTEN [DE]; DIECKMANN T) 19 January 2012 (2012-01-19) * the whole document * ----- | 1,2 | |

TECHNICAL FIELDS
SEARCHED (IPC)

B60W
B60Q

The present search report has been drawn up for all claims

| Place of search | Date of completion of the search | Examiner |
|---|---|---|
| Munich | 24 August 2016 | Sallard, Fabrice |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 02 0048

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2016

| Patent document cited in search report | Publication date | Patent family member(s) | Publication date |
|---|---|---|---|
| EP 1818233 A1 | 15-08-2007 | EP 1818233 A1<br>US 2007194904 A1 | 15-08-2007<br>23-08-2007 |
| US 2007159318 A1 | 12-07-2007 | NONE | |
| EP 2889182 A2 | 01-07-2015 | EP 2889182 A2<br>JP 2015123754 A<br>US 2015175062 A1 | 01-07-2015<br>06-07-2015<br>25-06-2015 |
| WO 2012006987 A1 | 19-01-2012 | CN 102971193 A<br>DE 102011015509 A1<br>DE 112011104078 A5<br>EP 2588355 A1<br>JP 2013533159 A<br>US 2013103274 A1<br>WO 2012006987 A1 | 13-03-2013<br>05-01-2012<br>17-10-2013<br>08-05-2013<br>22-08-2013<br>25-04-2013<br>19-01-2012 |

EPO FORM P0459

For more details about this annex : see Official Journal of the European Patent Office, No. 12/82

## REFERENCES CITED IN THE DESCRIPTION

**Patent documents cited in the description**

- WO 2015190769 A1